# EUROPEAN PATENT APPLICATION

(11) **EP 4 607 250 A1**
(43) Date of publication of application: **27.08.2025**
(21) Application number: 24159722.8
(22) Date of filing: 26.02.2024
(51) Int. Cl.: G01W 1/14, A01G 25/00

(54) **AN ASSEMBLY FOR MEASURING AN AMOUNT OF RAIN ON A SURFACE**

(71) Applicant: Husqvarna AB, 561 82 Huskvarna (SE)
(72) Inventor: Merkle, Martin, 89168 Niederstotzingen (DE); Rudolf, Peter, 89250 Senden (DE)
(74) Representative: Finkele, Rolf

(57) **Abstract**

An assembly **(100)** for measuring an amount of rain on a surface **(200)** comprises a piezo-electrical element **(500);** an evaluation electronics **(700);** and the surface **(200)** having a first side **(202),** and a second side **(204)** opposite to the first side **(202),** wherein the second side **(204)** is exposed to at least one rain drop **(R).** The assembly **(100)** is characterized in that the piezo-electrical element **(500)** is in direct contact with the first side **(202)** of the surface **(200)** such that a structureborne sound of the at least one rain drop **(R)** hitting the second side **(204)** is detectable by the piezo-electrical element **(500).** The piezo-electrical element **(500)** is further connected to the evaluation electronics **(700),** wherein the piezo-electrical element **(500)** generates an electrical signal representative for the detection of the at least one rain drop **(R),** and wherein the electrical signal is sent to the evaluation electronics **(700)** for evaluating the amount of rain on the surface **(200).**

## Description

### TECHNICAL FIELD

The present disclosure relates to an assembly for measuring an amount of rain on a surface, and more particularly to the assembly for measuring the amount of rain on the surface using a piezo-electrical element.

### BACKGROUND

For efficient and water-saving irrigation, it is necessary to take in account current and past weather conditions. For this purpose, generally a soil moisture sensor is used. However, even though the soil moisture sensor determines the soil moisture more or less precisely, it cannot detect rain at all or only with a very long delay. It takes a few hours and a sufficient amount of rain for the surface rainwater to seep away and reach the measuring depth of the soil moisture sensor. This may lead to the case where irrigation is activated even though it is raining. This may cause frustration for a user, who is often unaware of the limitations of the soil moisture sensor.

Further, in practice, there are different systems for the fast and precise recording of rainfall. There are resistive systems, which use two electrodes at a close distance, which are easily bridged by the water in a slightly conductive manner when it rains. These exposed contacts often struggle with corrosion and are therefore not intended as a long-term solution. Further, there are rain sensors based on an optical measuring principle, which are increasingly used today in the automotive sector directly in the windshield behind the windscreen wiper in order to minimize the risk of dirt. Further, there are capacitive sensors, which are usually mounted behind a housing and suffer from low sensitivity. To compensate all this, a small water basin is created in front of the sensor so that a closed layer of water is formed. However, this again poses problems in recording the duration of rain, as it may sometimes take longer for the water basin to dry out again.

Further, if in addition to the pure binary detection of rain, the amount of rain is also to be measured, in practice only a mechanical measuring principle with a seesaw is available. If one side of the seesaw fills with a certain amount of water, it tilts downwards, and empties itself in this process. Then, the other side of the seesaw gradually fills up until the same process is repeated on the other side. This system relies on the smoothness of the seesaw and consequently also gets problems with dirt.

An example of an apparatus for measuring rain is provided in United States Patent US 5,125,268 A (hereinafter referred to as '268 reference). The '268 reference provides an apparatus for acoustically measuring precipitation rates and total amounts of rainfall. The rainfall is collected in a reservoir and drained through a gravity feed tube system. The gravity feed tube system receives a steady flow of rainfall draining from the reservoir and converts the steady flow into drops by means of surface tension within the tube system. The formed drops exit the tube system and impact a surface that is acoustically responsive to the impact. The acoustically responsive surface is monitored by a microphone mounted distant to the acoustically responsive surface. Further, the acoustically responsive surface is monitored to count the number of drops impacting the same, wherein the number of drops counted is indicative of the precipitation rate and total amount of rainfall.

### SUMMARY OF THE INVENTION

In view of the above, it is an objective of the present invention to solve or at least reduce the drawbacks discussed above. The objective is at least partially achieved by an assembly for measuring an amount of rain on a surface.

According to an aspect of the present invention, the assembly for measuring the amount of rain on the surface comprises a piezo-electrical element, an evaluation electronics, and the surface having a first side, and a second side opposite to the first side, wherein the second side is exposed to at least one rain drop. The assembly is characterized in that the piezo-electrical element is in direct contact with the first side of the surface such that a structure-borne sound of the at least one rain drop hitting the second side is detectable by the piezo-electrical element. The piezo-electrical element is further connected to the evaluation electronics, wherein the piezo-electrical element generates an electrical signal representative for the detection of the at least one rain drop, and wherein the electrical signal is sent to the evaluation electronics for evaluating the amount of rain on the surface.

The present disclosure advantageously provides an assembly for measuring the amount of rain on the surface using the piezo-electrical element coupled to the evaluation electronics. The surface comprises the first side and the second side, wherein only the second side is exposed to rain and the first side is shielded from rain. The piezo-electrical element is advantageously contacted with the first side of the surface to avoid any direct or indirect contact with the rain, and/ or other foreign elements that may fall on the surface exposed to the rain. The positioning of the piezo-electrical element further contributes to the accuracy in the working of the piezo-electrical element as in this position on the first side of the surface, the piezo-electrical element is protected from dirt, or other foreign elements that may otherwise interfere with the working of the piezo-electrical element. Further, advantageously, the assembly determines the amount of rain based on rain drop frequency and intensity/ amplitude. Further, advantageously, the assembly does not detect the dew and/ or fog as rain. Thus, the assembly according to the invention does not give any false signals or indications.

According to an exemplary embodiment of the invention, the evaluation electronics is at least partially integrated in a PCB. The evaluation electronics may be partially or fully integrated in the PCB depending upon the design of the PCB, size of the PCB, spatial requirements of the PCB, area of the surface, among other factors. Further, the integration amount of the evaluation electronics may depend on the position of the PCB in the device on whose surface the amount of rain is determined. By integrating the evaluation electronics at least partially on the PCB, the assembly may be assembled easily and cost-efficient.

According to an exemplary embodiment of the invention, the surface is formed as an outer surface of a gardening device, particularly an irrigation device. The surface may be formed as the outer surface of the irrigation device as water drops from the irrigation device may not be detected as rain drops. However, the surface may be formed separate from the outer surface of the irrigation device without departing from the scope of the present invention.

According to an exemplary embodiment of the invention, the evaluation electronics comprises a filter which is configured to be sensitive to a frequency spectrum that corresponds to the resonant frequency of the surface. Further, the filter is configured to filter out ambient noise. The evaluation electronics may provide easy and robust signal evaluation, and/ or analysis, and/ or processing because the geometry of the surface defines the resonant frequency with which the surface is excited by the falling rain drop and thus the ambient noises may be easily suppressed.

According to an exemplary embodiment of the invention, the assembly further comprises a support structure, particularly a PCB, comprising at least a part of the evaluation electronics. Thereby, the evaluation electronics may be easily mounted to the device respectively the surface. Providing at least a part of the evaluation electronics on a PCB may allow a robust design because electrical vias and paths present on the PCB may be used for connecting the evaluation electronics.

According to an exemplary embodiment of the invention, the piezo-electrical element is mounted, particularly soldered, onto the support structure. Thereby, a robust connection between the piezo-electrical element and the evaluation electronics is providable. Additionally, the electrical connection between the evaluation electronics and the piezo-electrical element may be kept short and efficient. Additionally, PCB are standardized parts which may be easily customized. Hence, a robust design with low costs is providable. Further, soldering the piezo-electrical element to the PCB may provide a cost-efficient and reliable connection of the piezo-electrical element and the support structure.

According to an exemplary embodiment of the invention, the support structure, particularly the PCB, is mounted, particularly screwed, onto the first side such that the structure-borne sound of the at least one rain drop hitting the second side is transmittable via the support structure, particularly the PCB, to the piezo-electrical element. The support structure respectively the PCB may be provided with one or more screw holes to couple the support structure respectively the PCB with the first side of the surface using screws. According to an exemplary embodiment of the invention, at least two protrusions are formed on the first side, wherein the at least two protrusions each extends away from the first side, and wherein the at least two protrusions each comprises a through hole for guiding through a screw. The support structure respectively he PCB may be screwed to the first surface via the at least two protrusions. Thereby, an easy, cost-efficient, and reliable way of connecting the PCB to the surface is providable. Further, any other alternative coupling means feasible for the coupling of the PCB with the first side of the surface may be well within the scope of the present invention. The structure-borne sound of the at least one rain drop hitting the second side is transmitted from the first side to the support structure respectively the PCB. Then, the structure-borne sound is guided through the PCB and into the piezo-electrical element. The piezo-electrical element in turn detects the structure-bore sound of the rain drop. Hence, the support structure respectively the PCB may be easily and cost-efficiently interchanged.

According to an exemplary embodiment of the invention, the support structure, particularly the PCB, is mounted, particularly screwed, onto the first side such that the piezo-electrical element is in contact with the first side. In this arrangement, the piezo-electrical element may be at least partially sandwiched between the support structure respectively the PCB on the one side, and the first side of the surface on the other side. The piezo-electrical element may be positioned in direct contact with the first side. Direct contact according to the present invention may denote that substantially the entire main side of the piezo-electrical element is contacting the first side of the surface. Hence, the piezo-electrical element may have reliable contact with the first side. Thereby, the piezo-electrical element may be able to detect with high sensitivity the structure-borne sound due to oscillation of the surface caused by the rain drop falling on it. Further, a distance which the structure-born sound has to travel is shortened.

According to an exemplary embodiment of the invention, only a part of the support structure, particularly the PCB, at least partially integrating the evaluation electronics is screwed to the first side such that the piezo-electrical element is in direct contact with the first side. The PCB may be divided into different parts, for example, due to space constraints in the area where the piezo-electrical element may be mounted to have direct contact with the first side of the surface, such that only a part of the PCB, preferably integrating the evaluation electronics may be mounted using screws to the first side of the surface. Further, the evaluation electronics may be divided and positioned on different places in the device dependent on space constraints.

According to an exemplary embodiment of the invention, the piezo-electrical element is directly mounted, particularly soldered, glued or screwed, onto the first side, and the evaluation electronics and/or the PCB is/are mounted distant from the piezo-electrical element. Thereby, the assembly may be integrated in complex geometries of the device. Further, the evaluation electronics may be made from standardized parts. Further, soldering, gluing, or screwing are each well-established methods of connecting the piezo-electrical element to the first side. Using screws to connect the piezo-electrical element to the first side may provide a removable connection which is easy to maintain. Hence, a versatile and/or cost-effective assembly is providable. Further, the PCB may be mounted separately from the piezo-electrical element due to design of the PCB, size of the PCB, spatial requirements of the PCB, area of the surface, size, and design of the piezo electrical element, among other factors.

According to an exemplary embodiment of the invention, the piezo-electrical element and the evaluation electronics are electrically connected by an electrical wire. The electrical wire may provide simple, cost-effective, and widely used solution for establishing electrical connection between the piezo-electrical element and the evaluation electronics. Thereby, a reliable and cost-efficient electrical connection is providable. Further, the piezo-electrical element and the evaluation electronics may have wired or wireless connection between them as per the operational requirements of the assembly.

According to an exemplary embodiment of the invention, the assembly further comprises an elongate cylindrical channel comprising a first end and a second end opposite to the first end, wherein the first end of the channel is integrally formed with a funnel configured for momentarily collecting and draining rain towards the surface, and wherein the second end of the channel sealably engages with the surface, particularly the second side of the surface, and wherein the second side of the surface faces towards the funnel of the channel. The elongate cylindrical channel having the funnel may be sealably provided with the surface such that the rain may be collected and subsequently slowly dissipated for evaluation purposes without flooding the assembly. Further, the outlet of the funnel may comprise a filter to inhibit dirt or other foreign particles to enter parts of the assembly and potentially clog the parts of the assembly. The filter may be made from a non-corrosive material such as polyester or Teflon and the pore size of the filter may be approximately 0.1 millimeters.

According to an exemplary embodiment of the invention, the channel comprises a drip-off geometry disposed within the channel between the first end and the second end, and wherein the drip-off geometry is configured to substantially reduce the available space for rain flow under the force of gravity within the channel. Further, the drip-off geometry is configured to generate uniform droplets due to surface tension. The drip-off geometry provides uniform droplets regardless of the actual rain drop size. Further, the droplet formed only drips down, when the mass of the droplet exceeds its holding force. Further, due to the fact that these droplets may have the same size, it may be sufficient to only evaluate respectively count the number of droplets to determine the amount of rain.

According to an exemplary embodiment of the invention, the drip-off geometry comprises an elongate cylindrical body having a first base and a second base, wherein the first base extends to form a conical canopy extending towards the funnel, and wherein the second base extends to form a drop-shaped or conical shaped body extending towards the second side of the surface. The drip-off geometry may be such that it may narrow the flowing area for the rain inside the channel. Further, the drip-off geometry provides a sticking surface for the rain drop such that uniform shaped and sized droplets are formed. Further, the drip-off geometry may have any shape and size feasible to produce uniform droplets. According to an exemplary embodiment of the invention, the channel comprises a drip-tube disposed within the channel between the first end and the second end, wherein the drip-tube is configured to generate uniform droplets. The assembly may also comprise a conventional drip-tube instead of specially shaped drip-off geometry. The drip-tube may receive rain from the funnel and convert it into small uniform droplets that may drip-off and excite the second side of the surface.

Before discussing the invention with the help of the drawings the invention will be briefly discussed in general. An assembly for measuring an amount of rain on a surface is provided that comprises a contact microphone (consisting of a piezo disc or a piezo-electrical element) attached directly to the surface on which the rain drops hit. As a result, the rain drop causes the surface to oscillate and this structure-borne sound is detected by the piezo-electrical element with high sensitivity. Other ambient noises, on the other hand, are only very weekly recorded, as they are not transmitted directly via structure-borne sound, instead air is used as transmitter medium.

Further, according to one exemplary embodiment, the piezo-electrical element is soldered onto a PCB, which in turn is screwed firmly to the surface. As a result, the piezo-electrical element does not have to be glued directly to the surface and connected to the evaluation electronics by means of cables. Hence, a simple and cost-effective integration of the piezo-electrical element is possible. In addition to pure rain detection, the frequency and intensity of the raindrops is also used to estimate the amount of rain.

Further, to increase the measurement accuracy of the amount of rain, the rainwater is first collected and then directed to a defined drip-off geometry. As a result, regardless of the actual rain drop size, droplets of a defined size are generated at the drip geometry. The droplet only drips down, when the mass of the droplet formed in this way exceeds its holding force. Due to the fact that these droplets all have the same pre-defined size, it is sufficient to only record the number of droplets to determine the amount of rain. Of course, the intensity of the droplets may still be considered for additional verification. Another advantage of this second exemplary embodiment is that it also works with very small and fine, almost fog-like rain. The rainwater is simply collected until a sufficiently large droplet of water has formed and drips off.

The assembly according to the present invention may provide a rain amount meter without moving components. The assembly according to the present invention may be insensitive to dirt and insensitive to piezo-electrical element tilt. The assembly according to the present invention may detect the end of a rain shower directly without waiting for the piezo-electrical element to dry first. The assembly according to the present invention may not detect dew as rain. The assembly according to the present invention may theoretically measure a first drop of rain without any delay at the beginning of the rain shower. The assembly according to the present invention may be easily integrated into a device, preferably a gardening device, without influence on design, sealing, among other functional parameters of the device.

According to an exemplary embodiment of the invention, the assembly for measuring the amount of rain on the surface may be provided with the structure-borne sound microphone (the piezo disc or the piezo-electrical element) to detect rain intensity / amount. According to an exemplary embodiment of the invention, the piezo-electrical element may be soldered to PCB, which may further be acoustically connected to the surface via screws. According to an exemplary embodiment of the invention, the assembly may further comprise the drip-off geometry, which may convert rain drops of different size into droplets of equal size. This may result in stronger signal and higher rain amount accuracy.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a schematic view of an assembly for measuring an amount of rain on a surface in accordance with an exemplary embodiment of the present invention;
**FIG. 2** illustrates a schematic view of a connection of a PCB with a surface in accordance with an exemplary embodiment of the present invention;
**FIG. 3** illustrates a schematic top view and a schematic bottom view of a connection of a piezo-electrical element and a PCB in accordance with an exemplary embodiment of the present invention; and
**FIG. 4** illustrates a schematic top view and schematic bottom view of a connection of a piezo-electrical element and a PCB in accordance with an exemplary embodiment of the present invention;
**FIG. 5** illustrates a schematic view of an assembly for measuring an amount of rain on a surface in accordance with an exemplary embodiment of the present invention.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left", "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

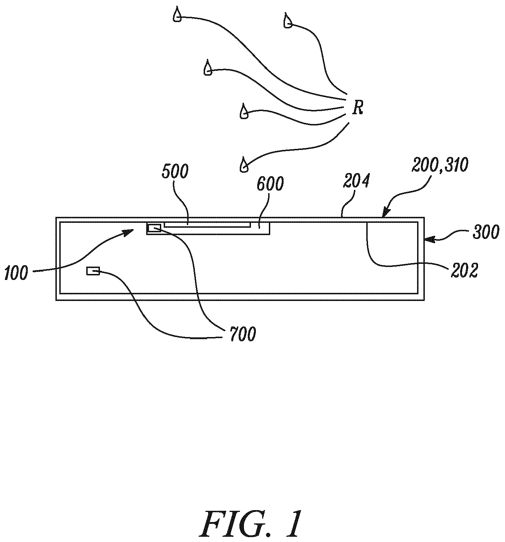

**FIG. 1** illustrates a schematic view of an assembly **100** for measuring an amount of rain on a surface **200** in accordance with an exemplary embodiment of the present invention. The surface **200** is formed as an outer surface **310** of a gardening device **300,** particularly an irrigation device **300,** only a part of which is shown for illustration purpose. The surface **200** has a first side **202,** and a second side **204** opposite to the first side **202,** wherein the second side **204** is exposed to at least one rain drop **R** from the beginning of the rainfall.

The assembly **100** comprises a piezo-electrical element **500.** The piezo-electrical element **500** is mounted in direct contact with the first side **202** of the surface **200** such that a structure-borne sound of the at least one rain drop **R** hitting the second side **204** is detectable by the piezo-electrical element **500.** Further, the assembly **100** comprises an evaluation electronics **700.** The evaluation electronics **700** is at least partially integrated in a support structure **600** which is formed as a PCB **600** (printed circuit board). Here, the evaluation electronics **700** comprises two parts from which one is integrated into the PCB **600** and the other is mounted at a different (spatially distant) location within the gardening device **300.** The evaluation electronics **700** comprises a filter which is configured to be sensitive to a frequency spectrum that corresponds to the resonant frequency of the surface **200.** Further, the filter is configured to filter out ambient noise. The evaluation electronics **700** also comprises a digital counter, a central processing unit, and/or a memory.

In the assembly **100** for measuring the amount of rain on the surface **200,** the piezo-electrical element **500** is directly connected to the evaluation electronics **700** at least partially integrated in the PCB **600.** The piezo-electrical element **500** generates an electrical signal representative for the detection of the at least one rain drop **R,** and the electrical signal is sent to the evaluation electronics **700** for evaluating the amount of rain on the surface **200,** particularly the second side **204** of the surface **200.**

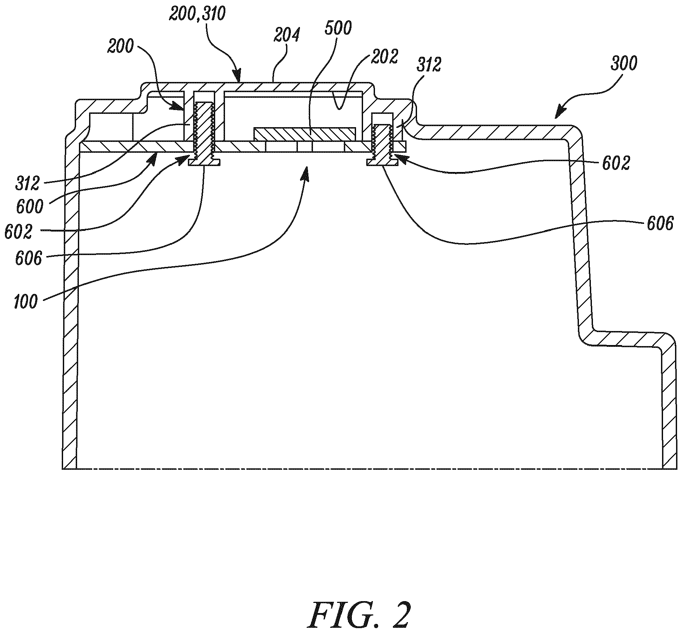

**FIG. 2** illustrates a schematic view of the connection of the PCB **600** with the surface **200** in accordance with an exemplary embodiment of the present invention. The piezo-electrical element **500** is soldered directly onto the PCB **600.** Further, the PCB **600** is mounted to the first side **202** of the surface **200.** The surface **200** is formed as the outer surface **310** of a gardening device **300.** The PCB **600** is screwed to the first side **202** such that the structure-borne sound of the at least one rain drop **R** hitting the second side **204** is transmitted via the PCB **600** to the piezo-electrical element **500.** The PCB **600** is screwed to the first side **202** using two screws **606.** The screw engagement between the PCB **600** and the first side **202** is by virtue of two screw holes **602** formed in the PCB **600.** The two screw holes **602** are formed corresponding to two protrusions **312** which are part of respectively are integrally formed with the first side **202** of the surface **200.** Each of the two screws **606** are guided through one of the two screw holes **602** of the PCB **600** and further through the corresponding one of the two protrusions **312** of the outer surface **310** to mount the PCB **600** to the first side **202** of the surface **200.**

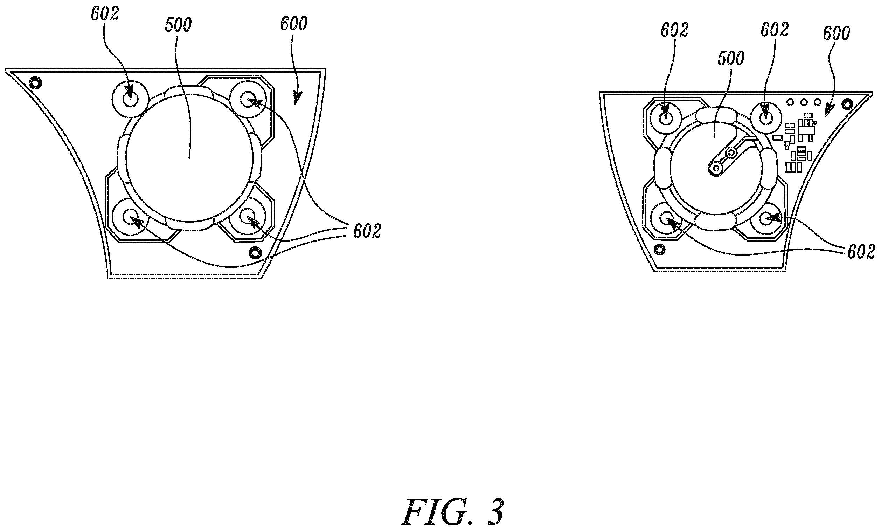

**FIG. 3** illustrates a schematic top view and a schematic bottom view of the connection of the piezo-electrical element **500** and the PCB **600,** in accordance with an exemplary embodiment of the present invention. The piezo-electrical element **500** is soldered directly onto the PCB **600** and the PCB **600** is mounted to the first side **202** such that the piezo-electrical element **500** is in direct contact with the first side **202.** Further, the PCB **600** is screwed to the first side **202** such that the piezo-electrical element **500** is in direct contact with the first side **202.** The PCB **600** comprises four screw holes **602.** One respective screw is inserted through each of the four screw holes **602** and screwed into the outer surface **310** of the gardening device **300** from the first side **202.**

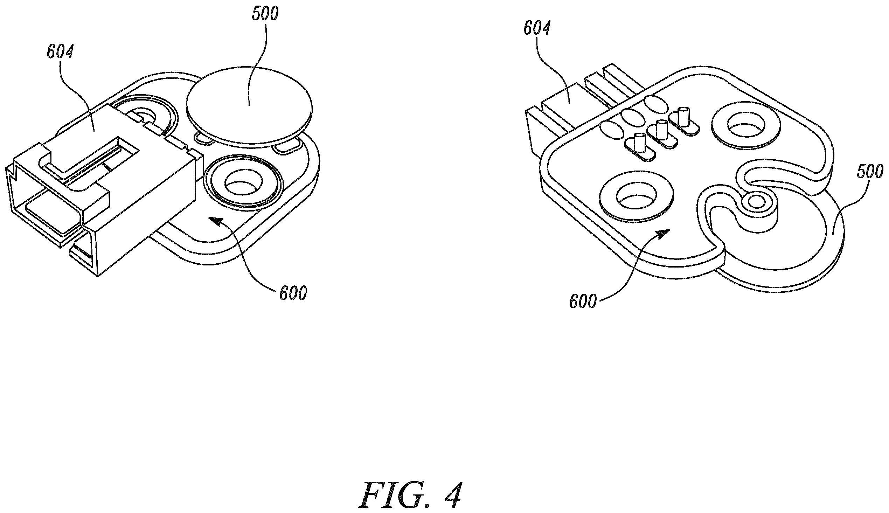

**FIG. 4** illustrates a schematic top view and a schematic bottom view of the connection of the piezo-electrical element **500** and the PCB **600** in accordance with a further exemplary embodiment of the present invention. The piezo-electrical element **500** is connected directly to a part of the PCB **600.** Hence, the contact surface between the PCB **600** and the piezo-electrical element **500** is kept small. The PCB **600** is formed small and such that it integrates solely a part of the evaluation electronics **700.** Hence, solely a small PCB **600** is screwed to the first side **202** of the surface **200** to allow the piezo-electrical element **500** to be in direct contact with the first side **202** of the surface **200.** Further, the PCB **600** comprises a female electrical connector **604** mounted and electrically connected to it. The female electrical connector **604** is configured to connect electrical cables for external applications.

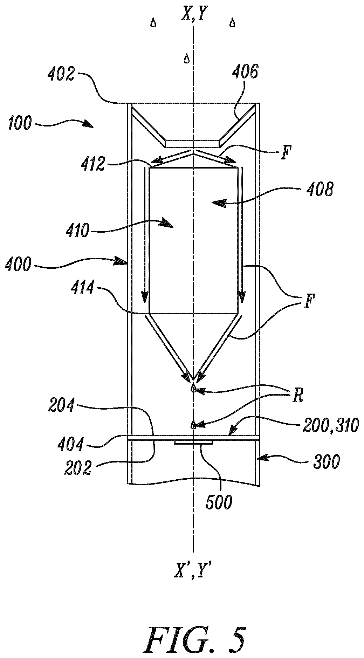

**FIG. 5** illustrates a schematic view of the assembly **100** for measuring the amount of rain on the surface **200** in accordance with a further exemplary embodiment of the present invention. The surface **200** is formed as a part of a housing surface **310** of a gardening device **300,** particularly an irrigation device **300.** The gardening device **300** is solely partly shown for illustration purpose. The surface **200** has the first side **202,** and the second side **204** opposite to the first side **202,** wherein the second side **204** is exposed to at least one rain drop **R** from the beginning of a rainfall.

Further, the assembly **100** comprises an elongate cylindrical channel **400** having a longitudinal axis **X-X'.** The channel **400** is configured to guide the at least one rain drop **R** of the rainfall towards the second side **204** of the surface **200** for measuring the amount of rain on the surface **200.**

Further, the channel **400** comprises a first end **402** and a second end **404** opposite to the first end **402.** A funnel **406,** which is particularly a structure having a frusto-conical geometry, is formed at the first end **402** of the channel **400.** The funnel **406** is configured for momentarily collecting and draining rain towards the second side **204** of the surface **200.** Further, the second end **404** of the channel **400** sealably engages with the second side **204** of the surface **200,** wherein the second side **204** of the surface **200** faces towards the funnel **406** of the channel **400.**

Further, the channel **400** comprises a drip-off geometry **408** disposed within the channel **400** between the first end **402** and the second end **404.** The drip-off geometry **408** has a longitudinal axis **Y-Y'** which aligns with the longitudinal axis **X-X'** of the channel **400.** The drip-off geometry **408** is configured to substantially reduce the available space for a flow **F** under the force of gravity within the channel **400** and further configured to generate uniform droplets **R** due to surface tension. In other words, the rain momentarily collected in the funnel **406** is directed as the flow **F** under the force of gravity to the drip- off geometry **408** to generate uniform droplets **R** due to surface tension. Only when the mass of the droplet **R** exceeds its holding force, the droplet **R** drips down towards the second side **204** of the surface **200.**

Further, the drip-off geometry **408,** as illustrated in **FIG. 5****,** comprises an elongate cylindrical body **410** having a first base **412** and a second base **414.** The first base **412** extends to form a conical canopy extending towards the funnel **406,** and the second base **414** extends to form a conical shaped body extending towards the second side **204** of the surface **200.** The flow **F** passes respectively flows along the conical canopy part of the drip-off geometry **408** towards the body **410** of the drip-off geometry **408** and finally towards the conical shaped body of the drip-off geometry **408** before it starts to fall off as the droplet **R** on the second side **204** of the surface **200.**

With continuous reference to **FIG. 5****,** the assembly **100** further comprises the piezo-electrical element **500.** The piezo-electrical element **500** is mounted in direct contact with the first side **202** of the surface **200** such that a structure-borne sound of the at least one droplet **R** hitting the second side **204,** is detectable by the piezo-electrical element **500.** The piezo-electrical element **500** is in direct contact with the first side **202** of the surface **200** at a position on the longitudinal axis **Y-Y'** of the drip-off geometry **408.** The piezo-electrical element **500** is directly mounted and/ or soldered on the first side **202** of the surface **200.** Further, the assembly **100** comprises the evaluation electronics **700** (shown in **FIG. 1**)**.**

With continuous reference to **FIG. 5****,** the piezo-electrical element **500** is in direct contact with the first side **202** of the surface **200** such that a structure-borne sound of the droplet **R** hitting the second side **204,** is detectable by the piezo-electrical element **500.** Additionally, the PCB **600** is mounted distant from the piezo-electrical element **500** (not shown in **FIG. 5**) Further, the PCB **600** and the piezo-electrical element **500** are electrically connected by an electrical wire (not shown in **FIG. 5**).

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Assembly
- **200**: Surface
- **202**: First Side
- **204**: Second Side
- **300**: Gardening Device/ Irrigation Device
- **310**: Outer Surface
- **312**: Protrusion
- **400**: Channel
- **402**: First End
- **404**: Second End
- **406**: Funnel
- **408**: Drip-Off Geometry
- **410**: Body
- **412**: First Base
- **414**: Second Base
- **500**: Piezo-electrical Element
- **600**: Support Structure / PCB
- **602**: Screw Holes
- **604**: Female Electrical Connector
- **606**: Screw
- **700**: Evaluation Electronics
- **R**: Rain Drop / Droplet
- **F**: Flow
- **X-X'**: Longitudinal Axis
- **Y-Y'**: Longitudinal Axis

## Claims

1. An assembly **(100)** for measuring an amount of rain on a surface **(200),** wherein the assembly **(100)** comprises:
a piezo-electrical element **(500);**
an evaluation electronics **(700);** and
the surface **(200)** having a first side **(202),** and a second side **(204)** opposite to the first side **(202),** wherein the second side **(204)** is exposed to at least one rain drop **(R);**
**characterized in that:**
wherein the piezo-electrical element **(500)** is mounted to the first side **(202)** of the surface **(200)** such that a structure-borne sound of the at least one rain drop **(R)** hitting the second side **(204)** is detectable by the piezo-electrical element **(500);**
wherein the piezo-electrical element **(500)** is further connected to the evaluation electronics **(700);**
wherein the piezo-electrical element **(500)** generates an electrical signal representative for the detection of the at least one rain drop **(R);**
wherein the electrical signal is sent to the evaluation electronics **(700)** for evaluating the amount of rain on the surface **(200).**

2. The assembly **(100)** according to claim 1,
wherein the evaluation electronics **(700)** is at least partially integrated in a PCB **(600).**

3. The assembly **(100)** according to claim 1 or claim 2,
wherein the surface **(200)** is formed as an outer surface **(310)** of a gardening device **(300),** particularly an irrigation device **(300).**

4. The assembly **(100)** according to any one of the preceding claims, wherein the evaluation electronics **(700)** comprises a filter which is configured to be sensitive to a frequency spectrum that corresponds to the resonant frequency of the surface **(200),** and/or which is configured to filter out ambient noise.

5. The assembly **(100)** according to any one of the preceding claims, wherein the assembly **(100)** further comprises:
a support structure **(600),** particularly a PCB **(600),** comprising at least a part of the evaluation electronics **(700).**

6. The assembly **(100)** according to claim 5,
wherein the piezo-electrical element **(500)** is mounted, particularly soldered, onto the support structure **(600).**

7. The assembly **(100)** according to claim 6,
wherein the support structure **(600),** particularly the PCB **(600),** is mounted, particularly screwed, to the first side **(202)** such that the structure-borne sound of the at least one rain drop **(R)** hitting the second side **(204)** is transmittable via the support structure **(600),** particularly the PCB **(600),** to the piezo-electrical element **(500).**

8. The assembly **(100)** according to claim 6,
wherein the support structure **(600),** particularly the PCB **(600),** is mounted, particularly screwed, onto the first side **(202)** such that the piezo-electrical element **(500)** is in contact with the first side **(202).**

9. The assembly **(100)** according to claim 8,
wherein only a part of the support structure **(600),** particularly the PCB **(600),** at least partially integrating the evaluation electronics **(700),** is screwed to the first side **(202)** such that the piezo-electrical element **(500)** is in direct contact with the first side **(202).**

10. The assembly **(100)** according to any of the claims 1 to 5,
wherein the piezo-electrical element **(500)** is directly mounted, particularly soldered, glued, or screwed, onto the first side **(202),** and
wherein the evaluation electronics **(700)** and/or the PCB **(600)** is/are mounted distant from the piezo-electrical element **(500).**

11. The assembly **(100)** according to claim 10,
wherein the piezo-electrical element **(500)** and the evaluation electronics **(700)** are electrically connected by an electrical wire.

12. The assembly **(100)** according to any of the preceding claims,
wherein the assembly **(100)** further comprises
an elongate cylindrical channel **(400),** wherein the channel **(400)** comprises a first end **(402)** and a second end **(404)** opposite to the first end **(402),**
wherein the first end **(402)** of the channel **(400)** is integrally formed with a funnel **(406)** configured for momentarily collecting and draining rain towards the surface **(200),** and
wherein the second end **(404)** of the channel **(400)** sealably engages with the surface **(200),** particularly the second side **(204)** of the surface **(200),** such that the second side **(204)** of the surface **(200)** faces towards the funnel **(406)** of the channel **(400).**

13. The assembly **(100)** according to claim 12,
wherein the channel **(400)** further comprises a drip-off geometry **(408)** disposed within the channel **(400)** between the first end **(402)** and the second end **(404),**
wherein the drip-off geometry **(408)** is configured to substantially reduce the available space for rain flow **(F)** under the force of gravity within the channel **(400),** and
wherein the drip-off geometry **(408)** is further configured to generate uniform rain drops **(R)** due to surface tension.

14. The assembly **(100)** according to claim 13,
wherein the drip-off geometry **(408)** further comprises an elongate cylindrical body **(410)** having a first base **(412)** and a second base **(414),**
wherein the first base **(412)** extends to form a conical canopy extending towards the funnel **(406),** and
wherein the second base **(414)** extends to form a drop-shaped or conical shaped body extending towards the second side **(204)** of the surface **(200).**

15. The assembly **(100)** according to claim 12,
wherein the channel **(400)** further comprises a drip-tube disposed within the channel **(400)** between the first end **(402)** and the second end **(404),** and
wherein the drip-tube is configured to generate uniform rain drops **(R).**
